# EUROPÄISCHE PATENTSCHRIFT

(11) **EP 2 294 456 B1**
(45) Veröffentlichungstag und Bekanntmachung des Hinweises auf die Patenterteilung: **18.12.2013**
(21) Anmeldenummer: 09772171.6
(22) Anmeldetag: 02.07.2009
(51) Int. Cl.: E05F 15/00, G01S 15/10, G01V 1/00, G01S 7/52, G01S 15/88, G01S 15/87

(54) **EINRICHTUNG UND VERFAHREN ZUR ULTRASCHALL-BEREICHSÜBERWACHUNG**
ULTRASOUND AREA SURVEILLANCE DEVICE AND METHOD
DISPOSITIF ET PROCÉDÉ DE SURVEILLANCE DE ZONES PAR ULTRASONS

(30) Priorität: 02.07.2008 DE 102008031320
(43) Veröffentlichungstag der Anmeldung: 16.03.2011
(73) Patentinhaber: Mayser GmbH & Co. KG, 89073 Ulm (DE)
(72) Erfinder: KREMSER, Heinz, A-8046 Graz-Statteg (AT); SOLLMANN, Matthias, 88499 Riedlingen-Zwiefaltendorf (DE)
(74) Vertreter: Patentanwälte Ruff, Wilhelm, Beier, Dauster & Partner
(86) Internationale Anmeldenummer: PCT/EP2009/004776
(87) Internationale Veröffentlichungsnummer: WO 2010/000471

(56) Entgegenhaltungen:
- DE-A1- 3 707 854
- JP-A- 6 066 065
- JP-A- 2000 130 014
- US-A- 5 563 848
- US-A1- 2004 141 419
- US-B1- 6 304 178

## Beschreibung

Die Erfindung bezieht sich auf eine Einrichtung und ein Verfahren zur Ultraschallüberwachung eines vorgebbaren Bereichs. Der überwachte Bereich kann insbesondere ein schließbarer Öffnungsbereich sein, z.B. eine durch eine bewegliche Scheibe schließbare Fensteröffnung eines Fahrzeugs, eine andere schließbare Öffnung eines Fahrzeugs, wie eine Heckklappenöffnung, eine Stauraumöffnung, eine Schiebedachöffnung oder eine Fahrzeugtüröffnung, oder auch eine schließbare Öffnung eines stationären Systems, wie einer Tür oder eines Fensters eines Gebäudes. Bei diesen Anwendungen für einen schließbaren Öffnungsbereich kann die Erfindung insbesondere zur Bereitstellung eines Einklemmschutzes dienen.

So ist aus der Patentschrift DE 195 38 071 C2 eine Einrichtung zur Überwachung eines Offnungsbereichs mittels Ultraschallwellen offenbart, die wenigstens einen Sendeempfänger und eine Auswerteeinheit umfasst. Der Sendeempfänger weist einen Erfassungsbereich auf, der den zu überwachenden Öffnungsbereich abdeckt und eine gegenüber seiner Breite parallel zur Ebene des überwachten Öffnungsbereichs geringere Tiefe senkrecht zu dieser Ebene aufweist. Der Sendeempfänger arbeitet im Reflexionsbetrieb, d.h. er sendet periodisch Ultraschallimpulse aus und schaltet jeweils anschließend auf Ultraschallwellenempfang um, um Reflexionen des abgestrahlten Ultraschallimpulses als Echohüllkurve bzw. Echogramm zu detektieren. Die Echogramme werden von der Auswerteeinheit hinsichtlich Vorhandenseins etwaiger Objekte im überwachten Bereich ausgewertet. Dazu ermittelt sie durch Integration die Fläche der Echohüllkurve, welche aus dem vom Sendeempfänger auf jeden ausgesendeten Ultraschallwellenimpuls hin zeitabhängig empfangenen Ultraschallwellen-Echosignal gebildet wird, und schließt auf ein Eingreifen eines Objektes in den überwachten Öffnungsbereich, wenn die ermittelte Echohüllkurvenfläche um ein vorgegebenes Maß über einer Vergleichsfläche liegt, die zu einer sich bei objektfreiem Öffnungsbereich ergebenden Echohüllkurve gehört.

Die Patentschrift DE 40 30 607 C2 offenbart eine als Einklemmschutz dienende Einrichtung zur Überwachung eines schließbaren Fahrzeugöffnungsbereichs mittels Ultraschallwellen, die in Transmission arbeitet, d.h. ein Ultraschallempfänger ist räumlich getrennt gegenüberliegend von einem Ultraschallsender angeordnet und empfängt die vom Ultraschallsender gesendeten Ultraschallimpulse. In einer nachgeschalteten Auswerteelektronik werden die Echoprofile, d.h. die Echogramme bzw. Hüllkurven der empfangenen Ultraschallsignale, in spezieller Weise dadurch ausgewertet, dass aktuell empfangene und digitalisierte Echoprofile mit einem oder mehreren gespeicherten Bezugsechoprofilen verglichen werden, die jeweils aus typischen Einzelwerten eines zuvor unter definierten Bedingungen aufgenommenen Echoprofils bestehen.

In der Offenlegungsschrift DE 42 07 885 A1 ist eine Einklemmschutzvorrichtung für schließbare Öffnungen insbesondere an Fahrzeugen offenbart, die eine ebenfalls in Transmission arbeitende akustische Messstrecke beinhaltet, an deren einem Ende ein Schallgeber und an deren anderem Ende ein Schallempfänger positioniert sind. Der Schallgeber sendet periodische Schallimpulse, die vom Schallempfänger empfangen werden. Zugeordnete Auswertemittel ermitteln aus dem empfangenen Signal die Schalllaufzeit und geben ein Erkennungssignal ab, wenn die ermittelte Laufzeit einen vorgebbaren Schwellwert überschreitet.

Aus der Patentschrift JP2000-130014 ist eine Einrichtung zur Überwachung eines Öffnungsbereichs mittels Ultraschallwellen offenbart, die zwei Sendeempfänger und eine Auswerteeinheit umfasst. Die Sendeempfänger arbeiten in Reflexionsbetrieb.

Ein bekanntes Problem von im Reflexionsbetrieb bzw. Single-Transducer-Modus betriebenen Ultraschallwandlern besteht darin, dass der Ultraschallwandler jeweils am Ende der Stimulation eines erzeugten Ultraschallimpulses für eine gewisse Zeit, die sogenannte Nachschwingdauer, nachschwingt und dieses Nachschwingen eine Erfassung und Auswertung von währenddessen ankommenden Ultraschallechos, die von wandlernahen Objekten herrühren, wesentlich erschwert bzw. unmöglich macht, weil die Nachschwingungen typischerweise eine deutlich größere Amplitude als die zu detektierenden Ultraschallechos aufweisen. In diesem als Nah- oder Blindbereich des Ultraschallwandlers bezeichneten Entfernungsbereich ist daher herkömmlicherweise eine Objektdetektion oder Abstandsmessung nicht oder nur unter Einsatz spezieller Maßnahmen möglich, wie sie z.B. in der Patentschrift DE 33 39 984 C2 und der Offenlegungsschrift DE 36 07 335 A1 offenbart werden.

Bekanntermaßen hängt bei Ultraschallmessungen die Ultraschallwellenlaufzeit wesentlich von den die Schallgeschwindigkeit beeinflussenden Parametern des betreffenden Mediums, wie der Umgebungsluft, ab, insbesondere von der Temperatur. Es ist daher bekannt, die Temperatur des Umgebungsmediums mit einem üblichen Temperatursensor zu messen und die Ultraschallmessergebnisse einer entsprechenden Temperaturkompensation zu unterziehen. In der Offenlegungsschrift DE 43 38 743 A1 wird für ein Verfahren und eine Vorrichtung zum Betrieb eines Ultraschallsensors, der vorzugsweise zur Abstandsmessung an einem Fahrzeug angeordnet ist, eine Temperaturerfassung durch den Ultraschallsensor selbst ohne zusätzlich notwendigen Temperatursensor vorgeschlagen. Dazu wird eine Laufzeitmessung für ein reflektiertes Ultraschallsignal durchgeführt, das von einer reflektierenden Fläche, z.B. einer Kante eines Nummernschildträgers des Fahrzeugs, geliefert wird, die in einem definierten Abstand zum Ultraschallsensor angeordnet ist. Als weiterer Vorteil dieser Temperaturerfassung ist erwähnt, dass sie nicht durch Störeinflüsse wie Motorabwärme oder Auspuffrohrabwärme beeinflusst wird.

Die Offenlegungsschrift DE 1 616 424 offenbart eine Einrichtung zur Radarüberwachung eines vorgebbaren Bereichs, insbesondere eines Flächen- oder Raumgebiets, mit wenigstens einem Paar von miteinander kooperierenden Sensoren, deren Wirkungsbereiche sich von unterschiedlichen Richtungen her in wenigstens einem Teil des Überwachungsgebiets überlappen, sodass ein dort befindliches Objekt in jedem der beiden Sensoren ein eigenes Ausgangssignal hervorruft, wobei die beiden Ausgangssignale nur dann als Objekterkennung gewertet werden, wenn sie in den beiden kooperierenden Sensoren gleichzeitig auftreten. Für diese Radarüberwachungseinrichtung ist in der Offeniegungsschrift DE 24 50 732 A1 erwähnt, dass als Sensoren vorzugsweise CW-Dopplerradargeräte verwendet werden, prinzipiell aber auch Sensoren der Infrarot-, Laser, und Sonartechnik benutzbar sind.

Eine generelle Schwierigkeit der herkömmlichen Objekterkennungssysteme mittels Ultraschall besteht darin, dass Objekte mit stark ultraschallabsorbierender Oberflächenbeschaffenheit nur schwer, lückenhaft oder gar nicht erkannt werden können. Bei im Transmissionsbetrieb arbeitenden Systemen besteht zudem die Schwierigkeit, dass vergleichsweise kleine Objekte, z.B. ein vor einem Einklemmen in eine schließbare Öffnung zu schützender Finger, aufgrund der Beugungseigenschaften von Ultraschallwellen nur schwer oder gar nicht detektiert werden können, da die vom Sender abgestrahlten Ultraschallwellenimpulse an solch kleinen Objekten aufgrund des Beugungseffektes allenfalls geringfügig geschwächt und somit vom räumlich vom Sender entfernt angeordneten Empfänger mit allenfalls sehr geringfügig geschwächter Amplitude empfangen werden.

Der Erfindung liegt als technisches Problem die Bereitstellung einer Einrichtung und eines Verfahrens zur Ultraschallüberwachung eines vorgebbaren Bereichs, wie beispielsweise eines schließbaren Öffnungsbereichs eines Fahrzeugs, zugrunde, die mit relativ geringem Aufwand und vergleichsweise zuverlässig das Vorhandensein eines Objektes im überwachten Bereich erkennen können.

Die Erfindung löst dieses Problem durch die Bereitstellung einer Einrichtung mit den Merkmalen des Anspruchs 1 und eines Verfahrens mit den Merkmalen des Anspruchs 9. Vorteilhafte Weiterbildungen der Erfindung sind in den Unteransprüchen angegeben.

Erfindungsgemäß sind wenigstens zwei räumlich voneinander getrennte Ultraschall-Sendempfänger mit sich überlappenden Erfassungsbereichen vorgesehen, die den zu überwachenden Bereich abdecken. Um das Vorhandensein von Objekten im Überwachungsbereich zu erkennen, ist die Steuer-/Auswerteeinheit dafür ausgelegt, die beiden Sendeempfänger zur Gewinnung von Echogrammen wenigstens im Reflexionsbetrieb anzusteuern, wobei die Echogrammauswertung einen Korrelationsvergleich wenigstens eines im Reflexionsbetrieb vom einen Sendeempfänger gewonnen Echogramms mit wenigstens einem im Reflexionsbetrieb vom anderen Sendeempfänger gewonnenen Echogramm umfasst.

Es zeigt sich, dass mit diesen Maßnahmen eine besonders zuverlässige Erkennung von Objekten im überwachten Bereich möglich ist. Der Korrelationsvergleich der von den beiden räumlich getrennt angeordneten Sendeempfängern jeweils im Reflexionsbetrieb gewonnenen Echogramme ermöglicht eine signifikante Unterdrückung von Stör/Fehlsignalen, indem auf diese Weise bewirkt werden kann, dass auf ein vorhandenes Objekt nur dann geschlossen wird, wenn ein entsprechendes Echosignal in den Echogrammen beider Sendeempfänger vorliegt und diese beiden Echosignale zeit- bzw. entfernungsrichtig dem gleichen Objekt zuzuordnen sind.

In einer vorteilhaften Weiterbildung der Erfindung fungiert wenigstens einer der Sendeempfänger als ein reflektierendes Referenzobjekt für die von einem anderen Sendeempfänger im Reflexionsbetrieb gewonnenen Echogramme. Dies ermöglicht die Bereitstellung einer definierten Referenz hinsichtlich Ultraschalllaufzeit bzw. Abstand der beiden Sendeempfänger voneinander direkt als entsprechendes Referenzechosignal in den im Reflexionsbetrieb von den Sendeempfängern gewonnenen Echogrammen.

In einer weiteren vorteilhaften Weiterbildung der Erfindung beinhaltet der Korrelationsvergleich einen Vergleich des jeweiligen Echogramms eines im Reflexionsbetrieb betriebenen Sendeempfängers mit dem jeweils um eine Echogramm-Mittelachse bezüglich der beiden Sendeempfänger gespiegelten Echogramm eines ebenfalls im Reflexionsbetrieb arbeitenden anderen Sendeempfängers. In der Ausgestaltung, bei der jeder Sendeempfänger als reflektierendes Referenzobjekt für den anderen Sendeempfänger fungiert, kann die Echogramm-Mittelachse direkt aus dem Echogramm als Mittelachse zwischen Sendeimpuls und reflektiertem Echoimpuls des gegenüberliegenden Sendeempfängers gewonnen werden.

In einer weiteren vorteilhaften Weiterbildung ist die Steuer-/Auswerteeinheit dafür ausgelegt, wenigstens zwei Sendeempfänger zusätzlich für einen Transmissionsbetrieb anzusteuern und zur Objekterkennungsauswertung auch wenigstens ein in Transmission gewonnenes Echogramm heranzuziehen. Mit dieser Maßnahme kann die Objekterkennungssicherheit weiter gesteigert werden. Durch die Kombination von Reflexionsbetrieb und Transmissionsbetrieb ist eine vergleichsweise sichere Objektdetektion auch in ultraschalltechnisch schwierigen Umgebungen möglich. Dabei können Ultraschallwellenstörimpulse noch besser als solche erkannt und unterdrückt bzw. ausgeblendet werden, und es kann auch die Position eines detektierten Objektes innerhalb des überwachten Bereichs in hinsichtlich Genauigkeit und/oder Zuverlässigkeit verbesserter Weise bestimmt werden. Die Positionserkennung von detektierten Objekten kann als Grundlage für eine dynamische Objektverfolgung oder für eine Unterscheidung der Kritikalität des detektierten Objektes dienen. Beispielsweise kann für ein Einklemmschutzsystem danach unterschieden werden, ob sich ein detektiertes Objekt in einer einklemmgefährdeten Position oder in einer ungefährdeten Position befindet, um nur in ersterem Fall eine Warn- bzw. Schutzinformation zu erzeugen.

In einer Ausgestaltung dieser Variante mit zusätzlichem Transmissionsbetrieb ist eine spezielle Nahbereich-Objekterkennung implementiert, mit der auch Objekte vergleichsweise zuverlässig erkannt werden können, die sich im Nah- bzw. Blindbereich eines jeweiligen Sendeempfängers befinden. Hierfür wird eine Schwächung eines empfangenen Transmissions-Echoimpulses und eine Schwächung eines empfangenen Reflexions-Echoimpulses geeignet bewertet.

In einer weiteren Ausgestaltung der Erfindung ist ein Temperaturbestimmungsbetrieb realisiert, bei dem wenigstens zwei Sendeempfänger im Transmissionsbetrieb betrieben werden und hierbei gewonnene Transmissions-Echogramme hinsichtlich Echolaufzeitänderungen überwacht werden, die für Änderungen der Temperatur des zwischen den Sendeempfängern vorliegenden Umgebungsmediums repräsentativ sind. Dies wird in weiterer Ausgestaltung der Erfindung für eine Temperaturkompensation der zur Objekterkennung ausgewerteten Echogramme benutzt und kann auch als Temperaturinformation bereitgestellt werden.

In einer weiteren Ausgestaltung der Erfindung ist eine Objektverfolgung vorgesehen, die über das bloße Detektieren des Vorhandenseins eines jeweiligen Objektes im Überwachungsbereich hinausgeht, indem anhand der erhaltenen Echogramm-Messergebnisse laufend die Position des Objektes im Überwachungsbereich ermittelt wird.

Vorteilhafte Ausführungsformen der Erfindung sind in den Zeichnungen dargestellt und werden nachfolgend beschrieben. Hierbei zeigen:
- Fig. 1: eine schematische Draufsicht auf einen schließbaren Öffnungsbereich mit zugeordneter Einrichtung zur Ultraschallüberwachung auf Vorhandensein von Objekten,
- Fig. 2: eine schematische Aufrissansicht des ultraschallüberwachten Öffnungsbereichs von Fig. 1,
- Fig.3: eine Seitenansicht einer Fahrzeugschiebetür mit der Ultraschall-Überwachungseinrichtung gemäß den Fig. 1 und 2 zur Einklemmschutzüberwachung eines zugehörigen Türöffnungsbereichs,
- Fig. 4: eine Seitenansicht eines Fahrzeugseitenfensters mit zugeordneter Ultraschall-Überwachungseinrichtung nach Art der Fig. 1 und 2 zwecks Einklemmschutzüberwachung,
- Fig. 5: eine Seitenansicht eines Fahrzeugheckklappenbereichs mit zugeordneter Ultraschall-Überwachungseinrichtung nach Art der Fig. 1 und 2,
- Fig. 6: eine Draufsicht auf einen Fahrzeugschiebedachbereich mit zugeordneter Ultraschall-Überwachungseinrichtung nach Art der Fig. 1 und 2 und
- Fig. 7 bis 15: Darstellungen verschiedener, von einer UltraschallÜberwachungseinrichtung nach Art der Fig. 1 und 2 gewonnener Echogramme zur Erläuterung eines damit ausführbaren Ultraschall-Überwachungsverfahrens in verschiedenen Betriebsvarianten.

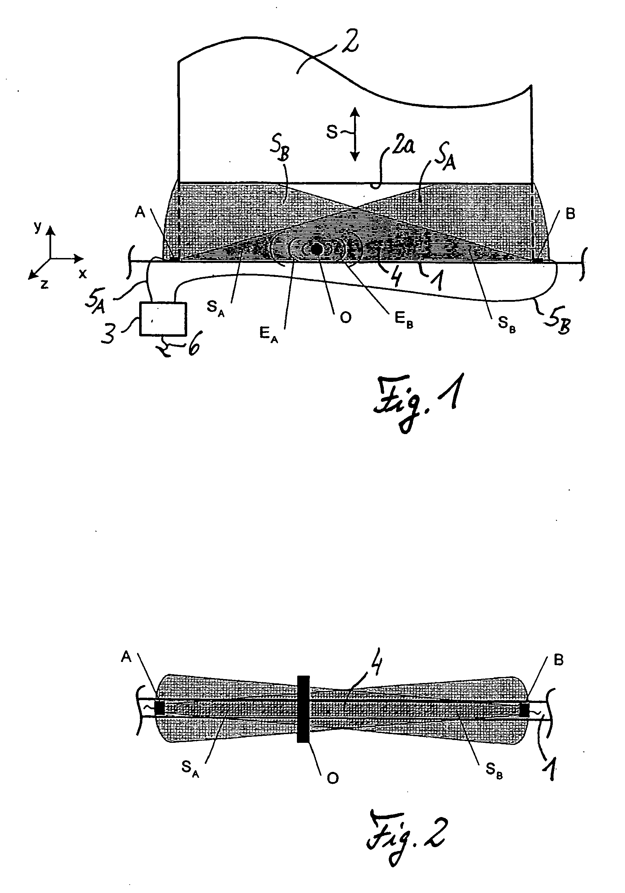

Die Fig. 1 und 2 veranschaulichen schematisch einen allgemeinen Anwendungsfall der Erfindung zur Öffnungsbereichsüberwachung mittels Ultraschallwellen beispielsweise zur Bereitstellung eines Einklemmschutzes. Der Öffnungsbereich ist hier zwischen einer Schließkante 1 und einem z.B. motorisch beweglichen Schließteil 2 definiert, das nichtparallel, z.B. senkrecht, zur Schließkante 1 verfahrbar ist, um den Öffnungsbereich wahlweise freizugeben oder abzudecken, wie mit einem Bewegungspfeil S angedeutet, wobei eine seitliche Begrenzung des Öffnungsbereichs z.B. durch entsprechende Rahmenteile in Fig. 1 gestrichelt symbolisiert ist. Bei dem überwachten Öffnungsbereich kann es sich z.B. um einen schließbaren Öffnungsbereich an einem Fahrzeug handeln, wie weiter unten näher erläutert, aber auch um einen anderen schließbaren Öffnungsbereich z.B. von Fenster- und Türöffnungsbereichen in stationären Einrichtungen.

Die zur Ultraschall-Bereichsüberwachung verwendete Einrichtung beinhaltet wenigstens zwei als Ultraschall-Sendeempfänger ausgebildete Ultraschallwandler A, B und eine zugehörige Steuer-/Auswerteeinheit 3. Die beiden Ultraschall-Sendeempfänger A, B sind voneinander beabstandet derart angeordnet, dass jeder im Erfassungsbereich S_{A}, S_{B} des jeweils anderen liegt, wobei unter Erfassungsbereich S_{A}, S_{B} derjenige Raumbereich zu verstehen ist, in den der jeweilige Sendeempfänger A, B sein Ultraschallfeld abstrahlt und in der Lage ist, aus diesem Bereich kommende Ultraschallwellensignale zwecks nachgeschalteter Auswertung zu empfangen. Im gezeigten Beispiel der Fig. 1 und 2 sind die beiden Sendeempfänger A, B an gegenüberliegenden Enden der Schließkante 1 derart angeordnet und zur Abstrahlung eines jeweils fächerartigen Schallfeldes S_{A}, S_{B} ausgebildet, dass sich die beiden fächerförmigen Schallfelder S_{A}, S_{B} unter Bildung eines entsprechenden Überlappungsbereichs 4 überlappen, der den hinsichtlich Einklemmschutz relevanten, zu überwachenden Öffnungsbereich bildet. In Fig. 1 ist der zu überwachende Öffnungsbereich 4 als dunkle Grauzone wiedergegeben und bildet in diesem Beispiel einen schließkantenseitigen Teil des gesamten, vom Schließteil 2 freigebbaren Offnungsbereichs. Die Erzeugung derartiger Schallfelder ist an sich bekannt und bedarf daher hier keiner näheren Erläuterungen, siehe z.B. die oben erwähnte DE 195 38 071 C2 und die dort genannte Literatur.

Wie insbesondere aus Fig. 2 ersichtlich, weisen diese Schallfelder S_{A}, S_{B} eine unter Bezugnahme eines in Fig. 1 angegebenen xyz-Koordinatensystems geringe Ausdehnung in z-Richtung im Vergleich zur Ausdehnung in der xy-Ebene auf, wobei die x-Achsenrichtung parallel zur Schließkante 1 und die xy-Ebene parallel zur Ebene des Schließteils 2 bzw. des von ihr abzudeckenden Offnungsbereichs ist. Mit anderen Worten wird die Detektionsempfindlichkeit durch diese fächerförmige Schallfeldgestaltung auf einen in z-Richtung gewünscht schmalen, vorhangartigen Bereich eingeschränkt. Dies vermeidet unerwünschte Fehldetektionen, bei denen sich ein Objekt zwar in der Nähe des Offnungsbereichs befindet, jedoch deutlich außerhalb der hinsichtlich Einklemmschutz relevanten Ebene zwischen Schließkante 1 und Vorderkante 2a des Schließteils 2.

Über drahtgebundene oder alternativ drahtlose Verbindungen 5_{A}, 5_{B} sind die beiden Sendeempfänger A, B an die Steuer-/Auswerteeinheit 3 gekoppelt, um von dieser geeignet angesteuert zu werden und von diesen erfasste Echogramme der Steuer-/Auswerteeinheit 3 zuzuführen. Über eine weitere drahtgebundene oder drahtlose Verbindung 6 kommuniziert die Steuer-/Auswerteeinheit 3 in herkömmlicher, hier nicht näher zu erläuternder Weise je nach Bedarf mit externen Systemkomponenten, z.B. einem das Schließteil 2 antreibenden Stellmotor und/oder externen Steuer- und/oder Recheneinheiten und/oder einer Warnanzeigeeinheit.

Die Steuer-/Auswerteeinheit 3 ist zusammen mit den beiden Sendeempfängern A, B dafür ausgelegt, Ultraschall-Echogramme aufzunehmen und auszuwerten, die sich aus Echohüllkurven von Ultraschallwellensignalen ergeben, die jeweils im Anschluss an und in Reaktion auf einen von einem der Sendeempfänger abgestrahlten Ultraschallwellenimplus empfangen werden, und zwar im sogenannten Reflexionsbetrieb durch denjenigen Sendeempfänger, der den Ultraschallwellenimpuls abgestrahlt hat, im sogenannten Transmissionsbetrieb hingegen durch den davon räumlich entfernt im Erfassungsbereich des sendenden Sendeempfängers liegenden anderen Sendeempfänger. Die Gewinnung und Auswertung derartiger Echogramme ist, soweit vorliegend nichts weiter dazu ausgeführt wird, an sich Stand der Technik und bedarf daher insoweit hier keiner näheren Erläuterungen. Es sei für diesbezügliche Details insbesondere auf die erwähnte DE 195 38 071 C2 und den dort zitierten Stand der Technik verwiesen.

Speziell ermöglicht die Echogrammauswertung das Erkennen des Vorhandenseins von Objekten im vorgebbaren, zu überwachenden Bereich, in den Fig. 1 und 2 durch ein stabförmiges Objekt O im Überwachungsbereich 4 symbolisiert, bei dem es sich in einem konkreten Anwendungsfall z.B. um einen einklemmgefährdeten Finger einer dort befindlichen Person handeln kann. Das Vorhandensein des Objekts O führt zu Ultraschallreflexionen an diesem Objekt O, die als Echofelder E_{A}, E_{B} vom jeweiligen Sendeempfänger A, B im Echogramm detektiert werden können.

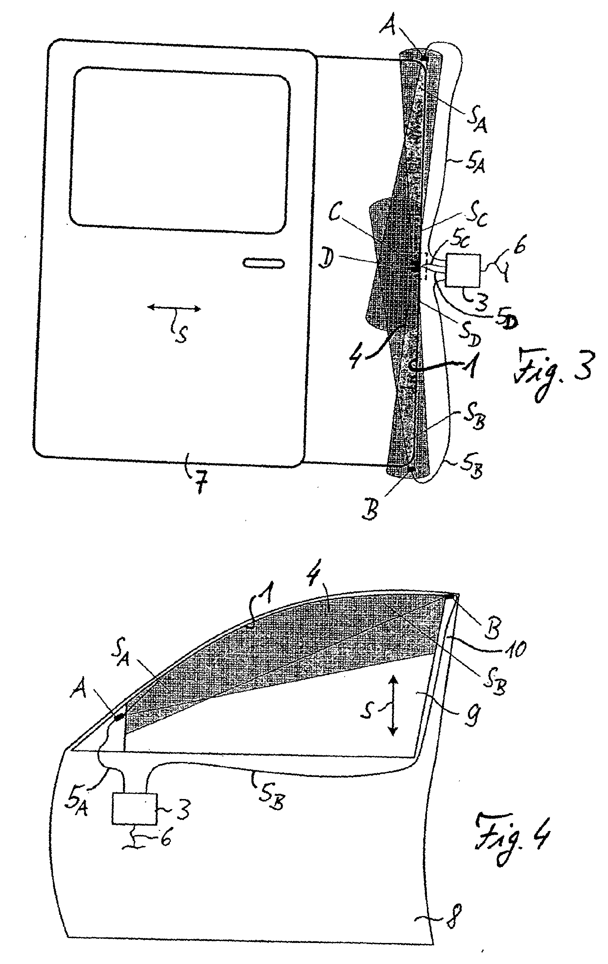

Die Fig. 3 bis 6 veranschaulichen schematisch einige konkrete Anwendungsbeispiele für Einklemmschutzsysteme mit einer Ultraschall-Bereichsüberwachungseinrichtung nach Art der Fig. 1 und 2. Zum leichteren Verständnis sind hierbei für identische und funktionell äquivalente Elemente die gleichen Bezugszeichen gewählt wie im allgemeinen Fall der Fig.1 und 2, so dass insoweit auf die obige Beschreibung dieser Elemente verwiesen werden kann.

Fig. 3 illustriert ein praktisches Ausführungsbeispiel an einem Fahrzeug mit automatisch betriebener Schiebetür 7 als das Schließteil 2 der Fig. 1 und 2. Hierbei kann es sich z.B. um die Schiebetür 7 eines Omnibuses oder eines Schienenfahrzeugs handeln. Die Schließkante 1 befindet sich in diesem Fall am rechten Ende des von der Schiebetür 7 wahlweise freigebbaren oder verschließbaren Türöffnungsbereichs, und der von der Ultraschall-Überwachungseinrichtung überwachte Bereich 4 bildet wiederum einen sowohl in der Ebene von Fig. 3 als auch in der dazu senkrechten Ebene relativ schmalen Bereich entlang der einklemmrelevanten Schließkante 1. Das Beispiel von Fig. 3 veranschaulicht zudem einen Fall, bei dem der relativ großen Ausdehnung des zu überwachenden Öffnungsbereichs 4 dadurch Rechnung getragen wird, dass außer den beiden schließkantenendseitig angeordneten Ultraschallwandlern A, B zwei weitere, als Sendeempfänger ausgebildete Ultraschallwandler C, D vorgesehen sind, die in einem mittleren Bereich der Schließkante 1 so angeordnet sind, dass sie in entgegengesetzte Richtungen entlang der Schließkante 1 ihre zugehörigen fächerförmigen Schallfelder S_{C}, S_{D} abstrahlen. Der überwachte bzw. überwachbare Öffnungsbereich 4 ist durch dasjenige Gebiet gebildet, in welchem sich jeweils mindestens zwei der vier Schallfelder S_{A} bis S_{D} überlappen, wobei jeder Ultraschallwandler A bis D im Erfassungsbereich wenigstens eines anderen Ultraschallwandlers liegt.

Fig. 4 zeigt ein praktisches Ausführungsbeispiel an einem Fahrzeug 8 mit motorisch betätigbarer Fensterscheibe 9 als das Schließteil 2 gemäß den Fig. 1 und 2. Wie gezeigt, ist der eine Sendeempfänger A im sogenannten Spiegeldreieck dieses Fahrzeugfensters angeordnet, während der andere Sendeempfänger B an einer gegenüberliegenden Seite eines Türrahmens 10 untergebracht ist. Als Schließkante 1 fungiert hier ein oberer Fensterrahmenabschluss. Durch entsprechende Überlappung der fächerförmigen Schallfelder S_{A}, S_{B} der beiden Ultraschallwandler A, B wird wiederum ein einklemmrelevanter Öffnungsbereich 4 entlang dieser Schließkante 1 bezüglich Vorhandensein von Objekten überwacht.

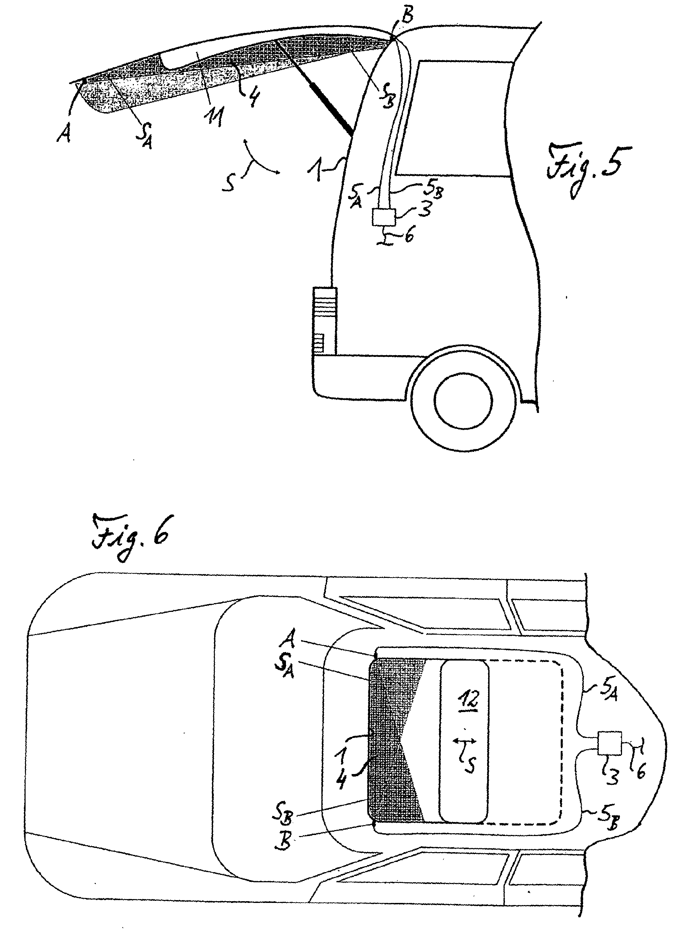

Fig. 5 veranschaulicht ein praktisches Ausführungsbeispiel an einem Fahrzeug mit z.B. motorisch betätigbarer Heckklappe 11 als das Schließteil 2 gemäß den Fig. 1 und 2. Die Öffnungsbewegung S ist hier folglich eine Drehbewegung der Heckklappe 11. In diesem Fall bildet der Heckklappenöffnungsrand den hinsichtlich Einklemmgefährdung zu überwachenden Schließkantenbereich 1. Der eine Sendeempfänger A ist in der Nähe einer Unterkante der Heckklappe 11 positioniert, während der andere Sendeempfänger B im Bereich einer Heckklappenaufhängung angeordnet ist. Wiederum sind die Ultraschallwandler A, B so ausgelegt und angeordnet, dass sich ihre abgestrahlten fächerförmigen Schallfelder S_{A}, S_{B} im zu überwachenden Öffnungsbereich 4 nahe der Heckklappe 11 bzw. entlang derselben an deren Innenseite überlappen.

Fig. 6 veranschaulicht ein praktisches Ausführungsbeispiel an einem Fahrzeug mit z.B. motorisch betreibbarem Schiebedach 12 als das Schließteil 2 gemäß den Fig. 1 und 2. Die Schließkante 1 ist in diesem Fall vom vorderen Schiebedachöffnungsrand gebildet. Die beiden Ultraschallwandler A, B sind wiederum auf gegenüberliegenden Seiten rechts bzw. links dieses vorderen Schiebedachöffnungsrandes 1 einander gegenüberliegend positioniert, so dass ihre fächerförmigen Schallfelder S_{A},S_{B} in einem an die Schließkante 1 angrenzenden, hinsichtlich Einklemmgefährdung zu überwachenden Bereich 4 überlappen.

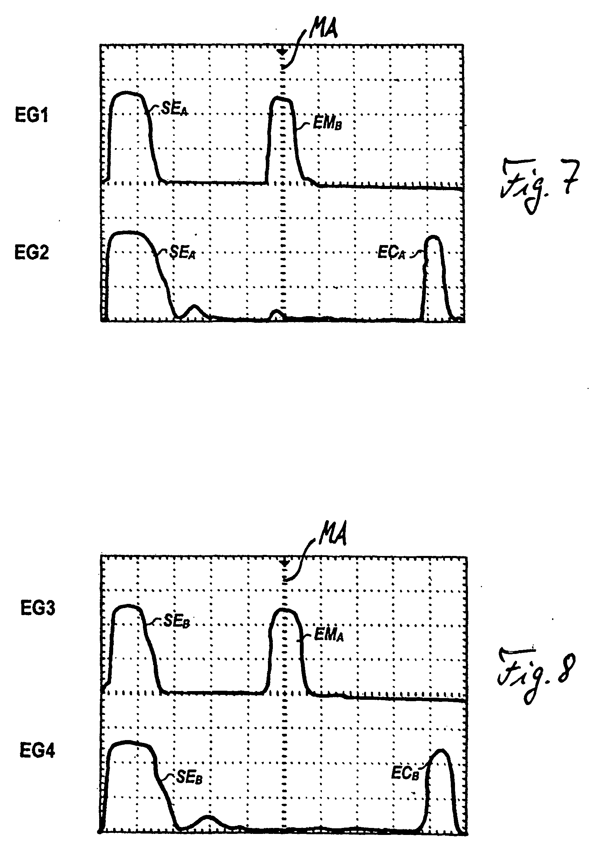

Die erfindungsgemäße Ultraschall-Überwachungseinrichtung mit den wenigstens zwei Ultraschallwandlern A, B ist zur Durchführung eines vorteilhaften Überwachungsverfahrens in verschiedenen Variationen ausgelegt bzw. auslegbar, wie sie nachfolgend anhand entsprechender Echogrammdarstellungen gemäß den Fig. 7 bis 15 näher erläutert werden. Grundlage ist jeweils, dass die verfahrensdurchführende Einrichtung wenigstens zwei Ultraschall-Sendeempfänger aufweist und diese mindestens im Reflexionsbetrieb betrieben werden, vorzugsweise darüber hinaus auch im Transmissionsbetrieb. Soweit nichts anderes gesagt, wird für die nachfolgende Funktionsbeschreibung auf die Überwachungseinrichtung des allgemeinen Falls der Fig. 1 und 2 Bezug genommen, wobei die entsprechenden Ausführungen in gleicher bzw. geeignet angepasster Weise für die konkreten Ausführungsbeispiele der Fig. 3 bis 6 und weiterer, nicht gezeigter konkreter Realisierungen der Erfindung gelten.

Die Fig. 7 und 8 dienen zunächst der Erläuterung der grundsätzlichen Funktionsweise der Überwachungseinrichtung mit den beiden Ultraschallwandlern A und B und der zugehörigen Steuer-/Auswerteeinheit 3. Fig. 7 zeigt zwei zeitsynchron untereinander dargestellte Echogramme EG1, EG2, wie sie typisch aus einem vom Sendeempfänger A abgestrahlten Ultraschallwellenimpuls SE_{A} erhalten werden. Das obere Echogramm EG1 bildet den Hüllkurven-Signalverlauf für den Fall, dass die Einrichtung im Transmissionsbetrieb arbeitet, während das im unteren Diagramm gezeigte Echogramm EG2 den Hüllkurven-Signalverlauf für den Fall bildet, bei dem die Einrichtung im Reflexionsbetrieb arbeitet, wobei sich in beiden Fällen das zeitlich erste Peaksignal auf den vom Ultraschallwandler A abgestrahlten Ultraschallwellenimpuls SE_{A} bezieht.

Im Transmissionsbetrieb empfängt der andere Ultraschallwandler B einen zugehörigen Empfangsimpuls EM_{B}, der im gezeigten Echogramm zeitlich auf einer Mittelachse MA des Diagramms liegt, deren Abstand zum Sendeimpuls SE_{A} der Ultraschalllaufzeit vom sendenden Ultraschallwandler A zum empfangenden Ultraschallwandler B entspricht. Im Reflexionsbetrieb erscheint ein Echoimpuls EC_{A}, der auf eine Reflexion des vom Ultraschallwandler A abgestrahlten Ultraschallwellenimpulses SE_{A} am anderen, beabstandet angeordneten Ultraschallwandler B zurückgeht, wozu die Ultraschallwandler A, B geeignet als Ultraschallreflektoren ausgebildet sind, z.B. durch Gestaltung entsprechender Ultraschall reflektierender Wandlerflächen. Da dieser vom nicht sendenden Ultraschallwandler B reflektierte Echoimpuls EC_{A} die doppelte Laufstrecke und damit Laufzeit hat wie der im Transmissionsbetrieb vom nicht sendenden Ultraschallwandler B empfangene Echoimpuls EM_{B}, entspricht der Laufzeitabstand des reflektierten Echoimpulses EC_{A} vom Sendeimpuls SE_{A} im Echogramm EG2 dem doppelten Laufzeitabstand des transmittiert empfangenen Impulses EM_{B} im Echogramm EG1. Mit anderen Worten liegt die Echogramm-Mittelachse MA und der in Transmission empfangene Impuls EM_{B} genau in der Mitte zwischen dem Sendeimpuls SE_{A} und dem in Reflexion empfangenen Echoimpuls EC_{A} vom nicht sendenden Ultraschallwandler B. Dieser Fall, bei dem sich kein Objekt im überwachten Bereich befindet, wird als Referenzzustand herangezogen.

Umgekehrt bilden die Echogramme EG3 und EG4, wie sie in Fig. 8 gezeigt sind, den Referenzzustand für den anderen objektfreien Fall, dass vom Ultraschallwandler B ein Sendeimpuls SE_{B} abgestrahlt wird, wobei dann in Transmission der Ultraschallwandler A einen entsprechenden Empfangsimpuls EM_{A} zeitlich auf der Mittelachse MA des Echogramms EG3 empfängt und in Reflexion der sendende Ultraschallwandler B einen auf eine Reflexion durch den anderen Ultraschallwandler A zurückgehenden Echoimpuls EC_{B} zu einem Zeitpunkt empfängt, der im Echogramm EG3 wiederum doppelt so weit vom Sendeimpuls SE_{B} entfernt ist wie der in Transmission empfangene Impuls EM_{A}.

Im Folgenden wird näher erläutert, wie insbesondere auch die im Reflexionsbetrieb vom jeweils nicht sendenden Ultraschallwandler reflektierten Echoimpulse EC_{A}, EC_{B} erfindungsgemäß in vorteilhafter Weise zur sicheren Objekterkennung sowie auch zur Selbstüberwachung und damit zur Eigenfehlererkennung der Überwachungseinrichtung genutzt werden können. Indem die Ultraschallwandler selbst als Ultraschallreflektoren ausgebildet sind und jeweils im Erfassungsbereich wenigstens eines anderen Ultraschallwandlers positioniert sind, bedarf es zur Gewinnung solcher reflektierter Echoimpulse nicht zwingend weiterer oder anderer Ultraschall-Reflexionsflächen. Sofern solche je nach Anwendungsfall vorhanden sind, können diese bei Bedarf geeignet zusätzlich in die Echogrammauswertung einbezogen werden.

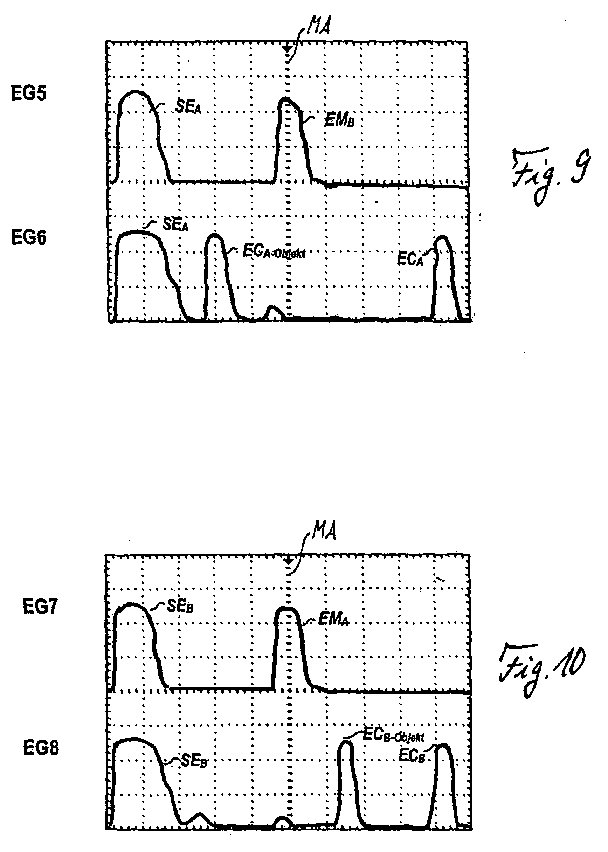

Die Fig. 9 und 10 zeigen Echogrammdarstellungen entsprechend den Fig. 7 bzw. 8 für den Fall, dass sich im überwachten Bereich ein Objekt befindet, wie beispielsweise das Objekt O gemäß den Fig. 1 und 2. Konkret entspricht das Echogramm EG5 im oberen Teilbild von Fig. 9 dem Echogramm EG1 von Fig. 7, wobei ersichtlich keine auswertbare Änderung des Echogrammverlaufs durch das im überwachten Bereich befindliche Objekt verursacht wird. Dies liegt daran, dass es sich beispielhaft um ein relativ kleines Objekt handelt, das aufgrund der Beugungseigenschaften der Ultraschallwellen in Transmission vom nicht sendenden Ultraschallwandler empfangenen Ultraschallwellensignal nicht merklich in Erscheinung tritt, jedenfalls dann, wenn sich das Objekt nicht sehr nahe am empfangenden Ultraschallwandler B befindet, was hier angenommen ist. Gleiches gilt für das in Transmission aufgenommene Echogramm EG7, wenn der Sendeimpuls SE_{B} vom Ultraschwallwandler B abgestrahlt und als Empfangsimpuls EM_{A} vom Ultraschallwandler A empfangen wird. Auch hier wird das Objekt bei Messung in Transmission vom Beugungseffekt der Ultraschallwellen "umgangen", so dass es kein auswertbares Signal im Transmissions-Echogramm EG7 liefert, wenn es sich nicht sehr nah am empfangenden Ultraschallwandler A befindet, was hier angenommen ist.

Hingegen tritt das Objekt in den im Reflexionsbetrieb aufgenommenen Echogrammen EG6 in Fig. 9 und EG8 in Fig. 10 deutlich detektierbar in Erscheinung, die im Übrigen den Reflexions-Echogrammen EG2 von Fig. 7 bzw. EG4 von Fig. 8 entsprechen. Speziell empfängt bei aktiviertem Reflexionsbetrieb des Ultraschallwandlers A selbiger das Reflexions-Echogramm EG6 mit einem zusätzlichen Echoimpuls EC_{A-Objekt,} der auf eine Reflexion des abgestrahlten Ultraschallwellenimpulses SA_{E} am zu detektierenden Objekt zurückgeht. Ebenso zeigt sich, wenn der andere Ultraschallwandler B im Reflexionsbetrieb aktiviert ist, in dessen Reflexions-Echogramm EG8 ein zusätzlicher Echoimpuls EC_{B-objekt} aufgrund einer Reflexion des abgestrahlten Ultraschallwellenimpulses SE_{B} am zu detektierenden Objekt.

Der zeitliche Versatz des objektbedingten Echoimpulses EC_{A-objekt} bzw. EC_{B-Objekt} relativ zum Zeitpunkt des jeweiligen Sendeimpulses SE_{A} bzw. SE_{B} entspricht dem doppelten räumlichen Abstand des Objektes vom jeweils sendenden Ultraschallwandler A bzw. B. Dies bedeutet, dass die beiden objektbedingten Echoimpulse EC_{A-objekt} und EC_{B-Objekt}, die im Reflexionsbetrieb des jeweils aktivierten Ultraschallwandlers A bzw. B erhalten werden, im Echogrammverlauf spiegelbildlich zur Echogramm-Mittelachse MA auftreten sollten. Diese Tatsache wird erfindungsgemäß für eine verbesserte Zuverlässigkeit der Objekterkennung genutzt, indem die so erhaltenen Reflexions-Echogramme einem entsprechenden Korrelationsvergleich unterzogen werden. Bei diesem Korrelationsvergleich wird überprüft, ob die besagte spiegelbildliche Korrelation zur Echogramm-Mittelachse MA für die zusätzlich zum Sendeimpuls SE_{A}, SE_{B} sowie dem als Referenz dienenden Echoimpuls EC_{A}, EC_{B} des jeweils gegenüberliegenden, reflektierenden Ultraschallwandlers erscheinenden, auf potentielle Objekte im überwachten Bereich hindeutenden Echoimpulse gegeben ist. Es kann dann vom Korrelationsergebnis abhängig gemacht werden, ob aus den aufgenommenen Reflexions-Echogrammen tatsächlich auf ein Objekt im überwachten Bereich zu schließen ist.

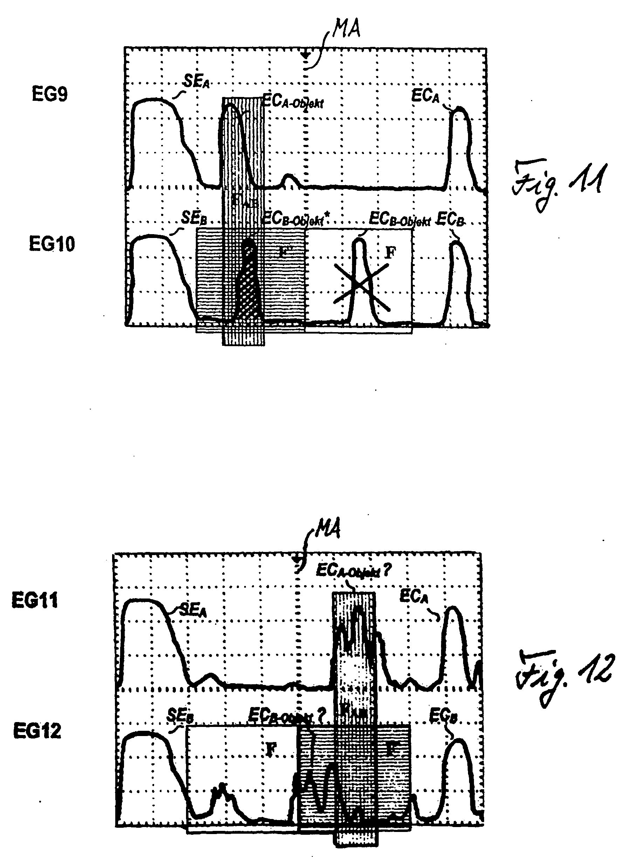

Eine konkrete Realisierung dieser korrelationsgestützten Objekterkennung wird nachfolgend anhand der Echogrammdarstellungen in den Fig. 11 und 12 näher erläutert. Fig. 11 zeigt im oberen Teilbild als Echogramm EG9 nochmals das Echogramm EG6 gemäß Fig. 9 mit dem objektbedingten Echoimpuls EC_{A-Objekt} für den Detektionsvorgang mit im Reflexionsbetrieb aktiviertem Ultraschallwandler A. Zeitsynchron darunter ist im unteren Teilbild von Fig. 11 ein Echogramm EG10 gezeigt, das vom Reflexions-Echogramm EG8 der Fig. 10 mit im Reflexionsbetrieb aktiviertem Ultraschallwandler B ausgeht, wobei ein Flächenbereich F, der den interessierenden objektbedingten Echoimpuls EC_{B-Objekt} enthält, an der Echogramm-Mittelachse MA in einen entsprechenden Flächenbereich F' gespiegelt ist, der dementsprechend ein Spiegelbild EC_{B-Objekt}. des realen objektbedingten Echoimpulses EC_{B-objekt} enthält.

In einem nächsten Verfahrensschritt wird untersucht, ob bzw. inwieweit eine Korrelation und damit zeitliche Kohärenz zwischen dem gespiegelten Reflexions-Echoimpuls EC_{B-Objekt*} des Ultraschallwandlers B mit einem zeitsynchron erscheinenden Reflexion-Echoimpuls im Reflexions-Echogramm EG9 vorliegt, das vom anderen Ultraschallwandler A erhalten wird, wenn dieser im Reflexionsbetrieb aktiviert ist. Dazu werden die Echogramm-Amplitudenwerte bzw. die Flächeninhalte der in Rede stehenden Echoimpulse innerhalb eines ausreichend schmalen Flächengebiets F_{AB} vergleichend bewertet, das in seiner Breite gerade den gespiegelten Reflexions-Echoimpuls EC_{B-Objekt*} umfasst. Ist eine derartige Korrelation bzw. zeitliche Kohärenz in einem ausreichenden Maß gegeben, wie im Beispiel von Fig. 11 erkennbar der Fall, wird dies als sichere Objekterkennung gewertet.

In einer praktischen Ausführungsvariante dieses Verfahrensablaufs werden die Echohüllkurven beispielsweise zunächst in zeitliche Proben unterteilt, und diese werden dann für das Reflexions-Echogramm EG10 eines der beiden Wandler um die zeitliche Echogramm-Mittelachse MA gespiegelt und dabei in ihrem Amplitudenwert halbiert, so dass ein auf der Mittelachse MA liegender Echoimpuls in seiner Amplitude unverändert bleibt. In gleicher Weise werden auch die Proben der Echohüllkurve bzw. des Echogramms EG9 des anderen Ultraschallwandlers im Amplitudenwert halbiert, sie werden aber nicht gespiegelt. Anschließend werden die einzelnen Proben der beiden so verarbeiteten Echogramme EG9 und EG10 addiert.

In einem weiteren Verfahrensschritt werden mehrere zeitlich hintereinander auftretende Proben zusammengefasst, vorzugsweise durch Bilden eines entsprechenden Flächenintegrals. Überschreitet nach dieser Echogrammdatenverarbeitung der so erhaltene Flächenintegralwert einen vorgegebenen ersten Amplitudenschwellwert, kann dies als ein erstes Indiz für das potentielle Vorhandensein eines Objektes im überwachten Bereich gewertet und als Folge davon z.B. der Auswertesystemteil "scharf' gestellt werden. In diesem scharf gestellten Zustand des Auswertesystemteils werden dann weitere Messzyklen in der beschriebenen Art und Weise mit abwechselnd im Reflexionsbetrieb aktivierten Ultraschallwandlern A und B durchgeführt, wobei jedes Mal der aktuell ermittelte Flächenintegralwert zum bisherigen Summenintegralwert addiert wird. Wenn spätestens nach einer bestimmten vorgebbaren Anzahl von Messzyklen dieser Summenflächenintegralwert einen geeignet vorgebbaren zweiten Amplitudenschwellwert überschreitet, wird dies vom Überwachungssystem als Vorhandensein eines Objektes im überwachten Bereich bewertet, und die Steuer-/Auswerteeinheit gibt ein entsprechendes Warn- und/oder Informationssignal ab, z.B. ein Warnanzeigesignal und/oder ein Stoppsignal an ein Antriebsystem des Schließteils.

Fig. 12 veranschaulicht vergleichend einen Fall, in dem das vorstehend erläuterte Verfahren eine falsche Objekterkennung verhindert. Das obere Teilbild von Fig. 12 zeigt ein Reflexions-Echogramm EG11, das wie das Echogramm EG9 von Fig. 11 vom Ultraschallwandler A erhalten wird, während das untere Teilbild von Fig. 12 ein Reflexions-Echogramm EG12 zeigt, welches wie das Echogramm EG10 von Fig. 11 vom Ultraschallwandler B erhalten wird. Im Echogramm EG11 tritt in einem Flächengebiet F_{AB} ein zusätzlicher Echoimpuls EC_{A-Objekt?} auf, der für sich allein betrachtet ein potentielles Vorhandensein eines Objektes im überwachten Bereich bedeuten könnte. Im Reflexions-Echogramm EG12 des anderen Ultraschallwandlers B zeigen sich mehrere amplitudenschwächere Echo- oder Störimpulse, wovon ein relativ amplitudenstärkster für sich allein betrachtet als möglicherweise objektbedingter Echoimpuls EC_{B-Objekt?} vordefiniert werden kann. Nach Durchführen der oben erläuterten Korrelationsvergleichsschritte mit Mittelachsenspiegelung des Echogramms EG12 mindestens in einem fraglichen Flächenbereich F bzw. F' entsprechend Fig. 11 ist jedoch eindeutig erkennbar, dass in diesem Fall keine ausreichende zeitliche Kohärenz und Amplitudenstärke der fraglichen Echoimpulse EC_{A-Objekt?}, EC_{B-Objekt?} vorliegt, so dass nicht auf das Vorhandensein eines zu detektierenden Objektes im überwachten Bereich geschlossen wird. Vielmehr wird erkannt, dass es sich bei diesen zusätzlichen Echoimpulsen um anderweitige Störimpulse z.B. von ultraschallfrequenten Fremdstörquellen oder um Echoimpulse handelt, die von Objekten stammen, die sich zwar in der Nähe der zu überwachenden Schließkante befinden, aber noch nicht in einer zu detektierenden einklemmgefährdeten Position.

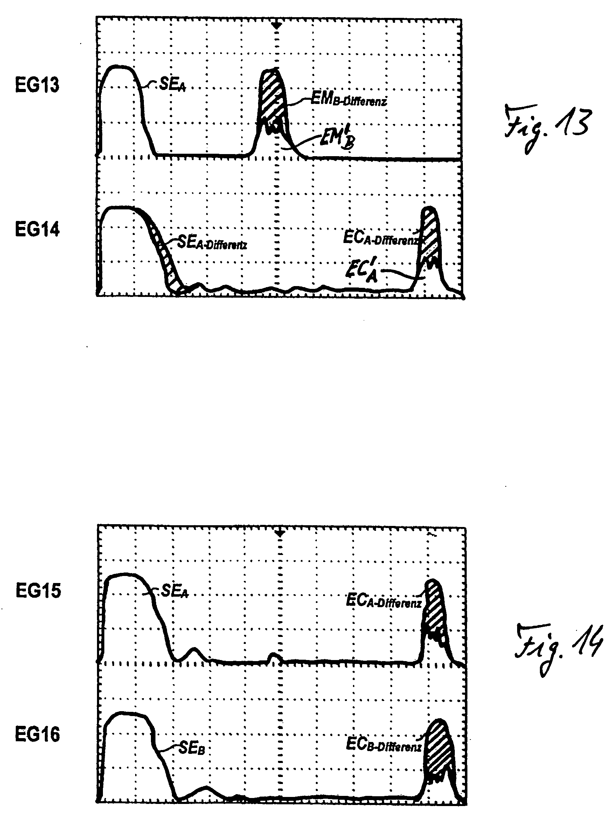

Der erfindungsgemäße Aufbau der Einrichtung zur Ultraschall-Bereichsüberwachung ermöglicht des Weiteren eine vergleichsweise sichere Detektion von Objekten, die sich im unmittelbaren Nahbereich eines der Sendeempfänger befinden. Solche Objekte sind, wie oben erläutert, vom betreffenden Ultraschallwandler im Reflexionsbetrieb aufgrund seines Nachschwingverhaltens praktisch nicht oder nur mit unverhältnismäßig hohem Aufwand detektierbar. Die Erfindung stellt eine Betriebsverfahrensvariante zur Verfügung, die diese Problematik ohne großen Aufwand löst. Die betreffende Vorgehensweise wird nachfolgend unter Bezugnahme auf Fig. 13 näher erläutert.

Dazu sei beispielhaft der Fall betrachtet, dass sich im unmittelbaren Nahbereich bzw. direkt am Ultraschallwandler A ein Objekt, wie beispielsweise ein einklemmgefährdeter Finger, befindet. Verfahrensgemäß wird für die spezifische Nahbereichsdetektion zum einen eine Detektionsmessung in Transmission durchgeführt. Es ergibt sich dabei typischerweise ein Echogramm EG13, wie es im oberen Teilbild von Fig. 13 wiedergegeben ist. Es enthält den üblichen Sendeimpuls SE_{A} vom sendenden Ultraschallwandler A und einen vom empfangenden, gegenüberliegenden Ultraschallwandler B empfangenen Empfangsimpuls EM'_{B}. Da sich in diesem angenommenen Fall das zu detektierende Objekt sehr nah am sendenden Ultraschallwandler A befindet, wird der von diesem Ultraschallwandler A abgestrahlte Ultraschallwellenimpuls an diesem Objekt stark bzw. großteils reflektiert, so dass der Empfangsimpuls EM'_{B} in seiner Amplitude verglichen mit dem objektfreien Referenzfall des Empfangsimpulses EM_{B} gemäß dem Echogramm EG1 von Fig. 1 stark reduziert ist. Die sich ergebende Differenz EM_{B-Differenz}=EM_{B}-EM'_{B} ist im Echogramm EG 13 von Fig. 13 als schraffierter Flächenbereich markiert. Wie daraus ersichtlich, ist diese Signaldifferenz EM_{B-Differenz} signifikant und daher gut detektierbar, was es grundsätzlich erlaubt, bereits daraus auf das Vorhandensein eines Objektes im Nahbereich des sendenden Ultraschallwandlers A zu schließen.

Vorzugsweise wird diese Objektdetektion durch eine Zusatzmessung mit dem gleichen Ultraschallwandler A im Reflexionsbetrieb gestützt, um die angenommene, vorläufige Objektdetektion zu verifizieren oder ggf. zu verwerfen. Im unteren Teilbild von Fig. 13 ist das sich dabei typischerweise ergebende Reflexions-Echogramm EG14 dargestellt. Es zeigt an der abklingenden Flanke des Sendeimpulses ein durch das Objekt im Nahbereich hervorgerufenes, verlängertes Nachschwingen, jedoch reicht die Differenz SE_{A-Differenz} zum objektfreien Referenzfall meist nicht aus, um daraus sicher auf das Vorhandensein eines Objektes im Nahbereich schließen zu können, zumal bei unmittelbarer Berührung der schallabstrahlenden Fläche des sendenden Ultraschallwandlers diese Signaldifferenz SE_{A-Differenz} gänzlich verschwinden kann. Jedoch ergibt sich im Fall, dass tatsächlich ein Objekt im Nahbereich des sendenden Ultraschallwandlers A vorliegt, ein vom gegenüberliegenden Ultraschallwandler B reflektierter Echoimpuls EC'_{A}, der wie der in Transmission gemessene Empfangsimpuls EM'_{B} gegenüber dem objektfreien Referenzfall, d.h. dem Empfangsimpuls EC_{A} gemäß dem Echogramm EG2 von Fig. 7, in seiner Amplitude deutlich geschwächt ist. Denn ein großer Teil des vom Ultraschallwandler A abgestrahlten Ultraschallwellenimpulses wird vom Objekt im Nahbereich reflektiert und erreicht schon den gegenüberliegenden Ultraschallwandler B nicht, und ein Teil des vom reflektierenden Ultraschallwandler B zurückgeworfenen Echosignals wird durch das Objekt im Nahbereich des Ultraschallwandlers A reflektiert, ohne den in Reflexion empfangenden Ultraschallwandler A zu erreichen. Wiederum ergibt sich eine signifikante und daher gut detektierbare Echosignaldifferenz EC_{A-Differenz}=EC_{A}-EC'_{A}.

Wenn auf diese Weise eine Korrelation der Schwächung des in Transmission gemessenen Empfangsimpulses EM_{B} bzw. EM'_{B} gemäß dem Echogramm EG13 mit einer Schwächung des in Reflexion gemessenen Echoimpulses EC_{A} bzw. EC'_{A} vom gegenüberliegenden Ultraschallwandler gemäß dem Echogramm EG14 festgestellt wird, kann mit erhöhter Sicherheit auf das Vorhandensein eines Objekts im Nahbereich des sendenden Ultraschallwandlers A geschlossen werden, zumal wenn wie im Beispielsfall von Fig. 13 keine weiteren Echosignale gemessen werden, die auf anderweitige Objekte im Überwachungsbereich schließen lassen.

Weiter optional kann diese Objekterkennung im Nahbereich z.B. des Ultraschallwandlers A durch je eine weitere Messung in Transmission und in Reflexion zusätzlich abgesichert werden, bei denen die Funktion der beiden Ultraschallwandler A und B vertauscht ist, d.h. bei denen der Ultraschallwandler B die Ultraschallwellenimpulse abstrahlt und der Ultraschallwandler A als Empfänger bzw. Reflektor fungiert. Es liegen dann vier gemessene Echogramme vor, die zur sicheren Bewertung einer Objekterkennung auf Korrelation untersucht werden können. Durch Auswertung dieser Messergebnisse kann zudem ein etwaiges Fehlen einer oder mehrerer der zweckmäßigerweise vorab gespeicherten Referenzsignale, d.h. der objektfreien Transmissions-Empfangsimpulse EM_{A}, EM_{B} und Reflexions-Echoimpulse EC_{A}, EC_{B} erkannt werden. Daraus kann mittels geeigneter Signalbewertung auf ein vorhandenes Objekt im sogenannten Blindbereich der Ultraschallwandleranordnung oder auf das Vorhandensein eines Objektes mit stark ultraschallabsorbierender Oberflächenbeschaffenheit, z.B. aus einem Textilmaterial wie Wolle oder Frottee, geschlossen werden.

Weitergehend ist durch zyklische bzw. periodische Bewertung der als Referenz dienenden Empfangs-/Echoimpulse EM_{A}, EM_{B}, EC_{A}, EC_{B} eine Überwachung des Betriebszustands der Ultraschallwandler A, B gemäß einer entsprechenden Verfahrensvariante möglich. Dies sei unter Bezugnahme auf Fig. 14 näher erläutert. Dort ist ein Beispiel illustriert, bei dem eine Schwächung des jeweils im Reflexionsbetrieb vom gegenüberliegenden Ultraschallwandler reflektierten und vom sendenden Ultraschallwandler empfangenen Echoimpulses detektiert wird, d.h. bei sendendem Ultraschallwandler A in einem im oberen Teilbild von Fig. 14 gezeigten Echogramm EG15 als entsprechendes Differenzsignal EC_{A-Differenz} und bei sendendem Ultraschallwandler B in einem Echogramm EG16 im unteren Teilbild von Fig.14 als entsprechendes Differenzsignal EC_{B-Differenz} Aus einem solchen Messergebnis kann geschlossen werden, dass sich im Nah- bzw. Blindbereich beider Ultraschallwandler A und B jeweils ein Objekt befindet, die keine weiteren Echoimpulse im Echogramm hervorrufen, oder dass, wenn dieses Messergebnis über längere Zeit hinweg für verschiedene Messzyklen bestehen bleibt, diese Differenzsignale EC_{A-Differenz}, EC_{B-Differenz} von einer oder mehreren fehlerhaften Komponenten in den Ultraschallwandlern A, B verursacht werden, beispielsweise durch eine Verschlechterung der Leistungsmerkmale der schallgebenden und schallempfangenden Wandlerteile selbst oder durch eine reduzierte Verstärkung in einem benutzten Empfangsverstärker. Somit können die in Transmission und Reflexion gemessenen Empfangs-/Echoimpulse EM_{A}, EM_{B}, EC_{A}, EC_{B} für eine zuverlässige Selbstüberwachung der gesamten Ultraschall-Überwachungseinrichtung herangezogen werden, einschließlich einer Überwachung der Messstreckenempfindlichkeit. Bei entsprechend festgestellter Abweichung kann von der Auswerteeinheit 3 eine Fehlermeldung generiert werden.

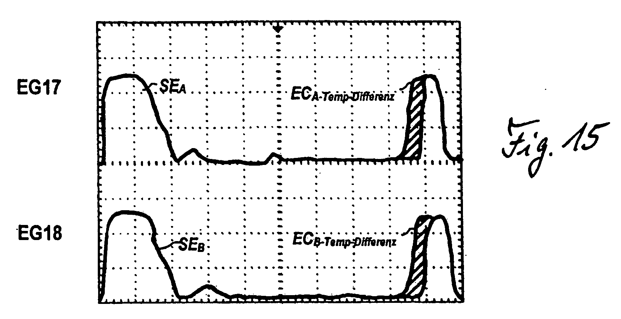

In einer weiteren Verwendungsoption ist mit der erfindungsgemäßen Überwachungseinrichtung ein Temperaturbestimmungsbetrieb mit Temperaturkompensation durchführbar, wie nachfolgend unter Bezugnahme auf die Echogrammdarstellung von Fig. 15 erläutert. Bei dieser Betriebsverfahrensvariante wird zunächst die Schallgeschwindigkeit des zwischen den beiden Ultraschallwandlern A, B vorliegenden Übertragungsmediums, typischerweise Luft, durch direkte Ultraschallmessung bestimmt. Dazu wird die Überwachungseinrichtung im Transmissionsmodus betrieben. Aus der zeitlichen Lage des Empfangsimpulses relativ zum Sendeimpuls ermittelt die Auswerteeinheit die genaue Laufzeit des vom einen Ultraschallwandler abgestrahlten und vom anderen Ultraschwallwandler empfangenen Ultraschallwellenimpulses und daraus bei bekanntem, vordefiniertem Abstand der beiden Ultraschallwandler A, B die momentane Schallgeschwindigkeit des zwischenliegenden Mediums. Zweckmäßigerweise werden dazu mehrere Messvorgänge ausgeführt und ein Mittelwert gebildet, um zufällige Fluktuationen bzw. Störeinflüsse zu unterdrücken.

Bekanntermaßen nimmt die Schallgeschwindigkeit bei einem Temperaturanstieg um 10°C um ca. 2% zu, d.h. bei einer beispielhaften Messstreckenlänge von 1 m entspricht eine Temperaturerhöhung von 10°C einer scheinbaren Messstreckenverkürzung um 2cm. Somit führt ein Temperaturanstieg zu einer Vorverlagerung der Echosignale im Reflexionsbetrieb. Fig. 15 zeigt im oberen Teilbild ein entsprechendes Echogramm EG17 bei aktiviertem Ultraschallwandler A und im unteren Teilbild ein Echogramm EG18 bei aktiviertem Ultraschallwandler B jeweils im Reflexionsbetrieb mit vorverlagerten Reflexions-Echosignalen EC_{A} bzw. EC_{B} und zugehörigen, in den Echogrammen EG17 und EG18 von Fig. 15 schraffiert markierten, durch die Temperaturänderung bedingten Echosignaldifferenzen EC_{A-Temp-Differenz} bzw. EC_{B-Temp-Differenz}.

Die in diesem Temperaturbestimmungsmodus der Überwachungseinrichtung erhaltene Temperaturinformation kann von der Auswerteeinheit zu einer entsprechenden Temperaturkompensation herangezogen werden, wodurch vermieden wird, dass diese rein temperaturänderungsbedingten Signaldifferenzen fälschlich als auf ein Objekt im Überwachungsbereich zurückgehende, objektbedingte Signaldifferenzen bewertet werden. Beim entsprechenden erfindungsgemäßen Betriebsverfahren werden die Referenzsignale EM_{A}, EM_{B}, EC_{A}, EC_{B} im Ausmaß der detektierten Schallgeschwindigkeitsänderungen zeitlich stets exakt den zyklisch bzw. periodisch gemessenen Echoimpulsen derart nachgeführt, dass die temperaturbedingten Echosignaldifferenzen EC_{A-Temp-Differenz}, EC_{B-Temp-Differenz} bleibend auf null gehalten werden. Im Gegensatz zu einer alternativen punktuellen Temperaturmessung mittels eines üblichen Temperatursensors gibt die vorliegende direkte Schallgeschwindigkeitsmessung mittels Ultraschallwellen ein genaues Abbild des Temperaturverlaufs über die gesamte Messstrecke auch bei schnellen Temperaturänderungen, wie Sonnenlicht-Schatten-Übergängen, was eine entsprechend rasche Nachführung bzw. Temperaturkompensation der Echogramm-Messergebnisse ermöglicht. Je nach Bedarf kann die im Temperaturbestimmungsmodus von der Überwachungseinrichtung erhaltende Temperaturinformation zusätzlich oder alternativ dazu genutzt werden, eine entsprechende Temperaturanzeige zur Verfügung zu stellen, die sich exakt auf die Temperatur des betreffenden Mediums, wie der Umgebungsluft, und nicht z.B. auf eine bloße Raumtemperatur bezieht. Eine solche Temperaturinformation kann z.B. zur Regelung einer Klimaanlage nützlich sein.

In einem weiteren optionalen Betriebsmodus kann durch die Ultraschall-Überwachungseinrichtung eine dynamische Verfolgung eines oder mehrerer detektierter Objekte im Überwachungsbereich vorgenommen werden. Dafür ist die Einrichtung in diesem Fall so ausgelegt, dass sie sich nicht auf das bloße Detektieren des Vorhandenseins eines Objektes anhand der korrelierten Echogramm-Messergebnisse beschränkt, wie oben insbesondere zu den Fig. 11 und 12 erläutert, sondern darüber hinaus aus der Lage des auf das jeweils detektierte Objekt zurückgehenden Echosignalimpulses im betreffenden Echogramm relativ zum Sendeimpuls und zum in Transmission gemessenen Empfangsimpuls oder in Reflexion gemessenen Echoimpuls des reflektierenden Ultraschallwandlers die Position des detektierten Objektes im Raum relativ zu den vorbekannten, definiert vorgegebenen Positionen der Ultraschallwandler ermittelt. Je nach Anwendungsfall können bereits zwei Ultraschallwandler ausreichen, die Objektposition mit hinreichender Genauigkeit zu bestimmen. Bei Bedarf kann die Genauigkeit der Positionsbestimmung durch den Einsatz eines oder mehrerer weiterer, geeignet angeordneter Ultraschallwandler erhöht werden. Durch eine kontinuierliche derartige Positionsbestimmung für das jeweils detektierte Objekt im Überwachungsbereich aus den zeitlich aufeinanderfolgenden Messzyklen kann dann die Bewegung des Objektes im Raum jedenfalls innerhalb des Überwachungsbereiches verfolgt werden. So kann beispielsweise erkannt werden, wie sich ein einklemmgefährdeter Finger im Überwachungsbereich bewegt bzw. sich in den Überwachungsbereich hinein oder aus diesem heraus bewegt, und die Einrichtung kann darüber hinaus erkennen, wo sich der Finger jeweils aktuell innerhalb des Überwachungsbereichs befindet, z.B. relativ zu einer Schließkante eines einklemmschutzüberwachten Offnungsbereichs.

Wie anhand der obigen Beschreibung vorteilhafter Ausführungsbeispiele deutlich wird, ermöglicht die Erfindung eine berührungslose Detektion von Objekten auch in ultraschalltechnisch schwieriger Umgebung, wobei in Reflexion und in Transmission gemessen werden kann. Durch geeignete Korrelationsbewertung von zunächst getrennt ermittelten Messergebnissen aus Transmission und Reflexion kann das Detektionsergebnis sicherer gemacht werden. Dies gilt sowohl hinsichtlich Ausblendung von etwa auftretenden Störimpulsen als auch Unterdrückung von Fehlwarnungen bei einem Einklemmschutzsystem, die von Objekten verursacht werden können, die sich zwar in der Nähe eines einklemmgefährdeten Öffnungsbereiches befinden, jedoch nicht in einer einklemmgefährdeten Position sind. Außerdem ermöglicht die Erfindung eine sichere Erkennung von Objekten auch im unmittelbaren Nahbereich bzw. Blindbereich des jeweiligen Ultraschallwandlers mit relativ geringem Aufwand. Die Erfindung ermöglicht darüber hinaus die Ermittlung der temperaturabhängigen Schallausbreitungsgeschwindigkeit repräsentativ für den Temperaturverlauf entlang der gesamten Messstrecke und darauf basierend eine sehr genaue Temperaturkompensation der Echogramm-Messergebnisse. Bei Bedarf kann die Temperaturinformation auch anderweitigen Zwecken dienen. Ein zyklischer, periodischer Vergleich von Referenzechogrammen für Transmission und Reflexion mit den laufend ermittelten Transmission- und Reflexions-Echogrammen erlaubt eine umfangreiche Selbstüberwachung des Gesamtsystems einschließlich seiner Empfindlichkeit.

Durch die erfindungsgemäße Einrichtung und das erfindungsgemäße Verfahren können Objekte, wie Körperteile von Personen, in einklemmgefährdeten, schließbaren Öffnungsbereichen sicher und berührungslos detektiert werden, so dass z.B. bei einem automatisch ablaufenden Schließvorgang die Steuer-/Auswerteeinheit einen Einklemmschutzfall aktivieren kann, durch den der Schließvorgang gestoppt bzw. reversiert wird. Die Erfindung ermöglicht auch die zuverlässige Detektion von Objekten mit stark schallabsorbierender Oberflächenbeschaffenheit, z.B. von Wollhandschuhen. Für den Vergleich mit laufend ermittelten Echogrammen sind Referenzechogramme ausreichend, die von den Ultraschwallwandlern selbst bereitgestellt werden können, d.h. weitere Reflexions- oder Umlenkflächen für Ultraschallwellen sind für diesen Zweck nicht zwingend erforderlich. Es genügen schallreflektierende Flächen von gegenüberliegend angeordneten Ultraschallwandlern. Die gesamte Messstrecke zwischen je zwei zusammenwirkenden Ultraschallwandlern kann lückenlos überwacht werden.

## Patentansprüche

1. Einrichtung zur Ultraschallüberwachung eines vorgebbaren Bereichs, insbesondere eines schließbaren Offnungsbereichs eines Fahrzeugs, mit
- wenigstens zwei Ultraschall-Sendeempfängern (A,B), die voneinander beabstandet so angeordnet sind, dass sich ihre Erfassungsbereiche (S_{A}, S_{B}) überlappen und einen vorgebbaren Überwachungsbereich (4) abdecken und sich jeder Sendeempfänger im Erfassungsbereich wenigstens eines anderen Sendeempfängers befindet, und
- einer Steuer-/Auswerteeinheit (3), die dafür ausgelegt ist, die Sendeempfänger zur Gewinnung von Echogrammen wenigstens in einem Reflexionsbetrieb anzusteuern und von den Sendeempfängern gewonnene Echogramme hinsichtlich Vorhandensein von Objekten im Überwachungsbereich auszuwerten, wobei diese Auswertung einen Korrelationsvergleich wenigstens eines im Reflexionsbetrieb von einem der Sendeempfänger gewonnenen Echogramms mit wenigstens einem im Reflexionsbetrieb von einem anderen der Sendeempfänger gewonnenen Echogramm umfasst.

2. Einrichtung nach Anspruch 1, weiter **dadurch gekennzeichnet, dass** wenigstens einer der Sendeempfänger als ein reflektierendes Referenzobjekt für die von einem der anderen Sendeempfänger im Reflexionsbetrieb gewonnenen Echogramme fungiert.

3. Einrichtung nach Anspruch 1 oder 2, weiter **dadurch gekennzeichnet, dass** der Korrelationsvergleich einen Vergleich des Echogramms eines der Sendeempfänger mit dem um eine Echogramm-Mittelachse (MA) bezüglich der beiden Sendeempfänger gespiegelten Echogramm eines der anderen Sendeempfänger beinhaltet.

4. Einrichtung nach einem der Ansprüche 1 bis 3, weiter **dadurch gekennzeichnet, dass** die Steuer-/Auswerteeinheit dafür ausgelegt ist, wenigstens zwei Sendeempfänger zusätzlich in einem Transmissionsbetrieb anzusteuern und zur Objekterkennungsauswertung auch wenigstens ein in Transmission gewonnenes Echogramm heranzuziehen.

5. Einrichtung nach Anspruch 4, weiter **dadurch gekennzeichnet, dass** die Steuer-/Auswerteeinheit zur Erkennung eines Objektes in einem Nahbereich des jeweiligen Sendeempfängers ausgelegt ist und hierfür eine Schwächung eines empfangenen Transmissions-Echoimpulses und eine Schwächung eines Reflexions-Echoimpulses bewertet, der von einem der Sendeempfänger gesendet und von ihm als Reflexionssignal eines anderen der Sendeempfänger empfangen wird.

6. Einrichtung nach einem der Ansprüche 1 bis 5, weiter **dadurch gekennzeichnet, dass** die Steuer-/Auswerteeinheit für einen Temperaturbestimmungsbetrieb ausgelegt ist, in dem sie wenigstens zwei der Sendeempfänger in einem Transmissionsbetrieb ansteuert und hierbei gewonnene Transmissions-Echogramme hinsichtlich Echolaufzeitänderungen überwacht, die für Änderungen der Temperatur eines zwischen den Sendeempfängern vorliegenden Umgebungsmediums repräsentativ sind.

7. Einrichtung nach Anspruch 6, weiter **dadurch gekennzeichnet, dass** die Steuer-/Auswerteeinheit für eine Temperaturkompensation der zur Objekterkennung ausgewerteten Echogramme anhand der im Temperaturbestimmungsbetrieb ermittelten Echolaufzeitänderungen ausgelegt ist.

8. Einrichtung nach einem der Ansprüche 1 bis 7, weiter **dadurch gekennzeichnet, dass** die Steuer-/Auswerteeinheit für einen Objektverfolgungsbetrieb ausgelegt ist, in dem sie laufend die Position eines oder mehrerer, als im Überwachungsbereich vorhandenen detektierter Objekte in sukzessiven Messvorgängen anhand der gewonnenen Echogramme relativ zu vorbekannten Positionen der Sendeempfänger ermittelt.

9. Verfahren zur Ultraschallüberwachung eines vorgebbaren Bereichs, insbesondere eines schließbaren Öffnungsbereichs eines Fahrzeugs, mit folgenden Schritten:
- Aufnehmen und Auswerten von Echogrammen durch wenigstens zwei Ultraschall-Sendeempfänger (A,B) wenigstens in einem Reflexionsbetrieb, die voneinander beabstandet so angeordnet sind, dass sich ihre Erfassungsbereiche (S_{A}, S_{B}) überlappen und einen vorgebbaren Überwachungsbereich (4) abdecken und sich jeder Sendeempfänger im Erfassungsbereich wenigstens eines anderen Sendeempfängers befindet,
- wobei die Auswertung der von den Sendeempfängern gewonnenen Echogramme hinsichtlich Vorhandensein von Objekten im Überwachungsbereich vorgenommen wird und einen Korrelationsvergleich wenigstens eines im Reflexionsbetrieb von einem der Sendeempfänger gewonnenen Echogramms mit wenigstens einem im Reflexionsbetrieb von einem anderen der Sendeempfänger gewonnenen Echogramm umfasst.

10. Verfahren nach Anspruch 9, weiter **dadurch gekennzeichnet, dass** für den Korrelationsvergleich das Echogramm des einen Sendeempfängers mit dem an einer Echogramm-Mittelachse (MA), die mit diesem und einem anderen der Sendeempfänger assoziiert ist, gespiegelten Echogramm des anderen Sendeempfängers verglichen wird.

11. Verfahren nach Anspruch 9 oder 10, weiter **dadurch gekennzeichnet, dass** die Sendeempfänger zusätzlich in einem Transmissionsbetrieb angesteuert werden und zur Objekterkennungsauswertung auch wenigstens ein in Transmission gewonnenes Echogramm herangezogen wird.

12. Verfahren nach einem der Ansprüche 9 bis 11, weiter **dadurch gekennzeichnet, dass** eine Nahbereichs-Objekterkennung für einen jeweiligen Sendeempfänger durchgeführt und hierfür eine Schwächung eines Transmissions-Empfangsimpulses und eines Schwächung eines Reflexions-Echoimpulses bewertet werden, der von einem der Sendeempfänger gesendet und von ihm als Reflexionssignal eines anderen der Sendeempfänger empfangen wird.

13. Verfahren nach einem der Ansprüche 9 bis 12, weiter **dadurch gekennzeichnet, dass** ein Temperaturbestimmungsbetrieb durchgeführt wird, in dem wenigstens zwei der Sendeempfänger in einem Transmissionsbetrieb arbeiten und hierbei gewonnene Transmissions-Echogramme hinsichtlich Echolaufzeitänderungen überwacht werden, die für Änderungen der Temperatur eines zwischen den beiden betreffenden Sendeempfängern vorliegenden Umgebungsmediums repräsentativ sind.

14. Verfahren nach Anspruch 13, weiter **dadurch gekennzeichnet, dass** die zur Objekterkennung ausgewerteten Echogramme einer Temperaturkompensation anhand der im Temperaturbestimmungsbetrieb ermittelten Echolaufzeitänderungen unterzogen werden.

15. Verfahren nach einem der Ansprüche 9 bis 14, weiter **dadurch gekennzeichnet, dass** die Position eines jeweils als im Überwachungsbereich vorhanden detektierten Objektes in aufeinanderfolgenden Messvorgängen kontinuierlich bestimmt und verfolgt wird.

## Claims

1. A device for ultrasound surveillance of a predefinable area, in particular a closable opening area of a vehicle, comprising
- at least two ultrasonic transceivers (A, B) disposed spaced from one another such that their detection ranges (S_{A}, S_{B}) are overlapping and cover a predefinable surveillance area (4) and each transceiver is located within the detection range of at least one other transceiver, and
- a control/evaluation unit (3) configured so as to control the transceivers in at least one reflection mode for obtaining echograms, and to evaluate echograms obtained by the transceivers for the presence of objects within the surveillance area, wherein the evaluation comprises a correlation comparison of at least one echogram obtained during the reflection mode by one of the transceivers to at least one echogram obtained during the reflection mode by another one of the transceivers.

2. The device according to claim 1, further **characterized in that** at least one of the transceivers acts as a reflecting reference object for the echograms obtained during the reflection mode by one of the other transceivers.

3. The device according to claim 1 or 2, further **characterized in that** the correlation comparison includes a comparison of the echogram of one of the transceivers to the echogram of one of the other transceivers, with the latter echogram mirrored along an echogram central axis (MA) relative to the two transceivers.

4. The device according to any one of the claims 1 to 3, further **characterized in that** the control/evaluation unit is configured so as to control at least two additional transceivers during a transmission mode and also to consider at least one echogram obtained in transmission for object detection evaluation.

5. The device according to claim 4, further **characterized in that** the control/evaluation unit is configured for detecting an object in a near range of a respective transceiver and to that end evaluates an attenuation of a received transmission echo pulse and an attenuation of a reflection echo pulse, said reflection echo pulse sent from one of the transceivers and received by said transceiver as a reflection signal of another of the transceivers.

6. The device according to any one of the claims 1 to 5, further **characterized in that** the control/evaluation unit is configured for a temperature determination mode, wherein the unit controls at least two of the transceivers in a transmission mode and monitors transmission echograms obtained thereby in view of echo runtime changes which are representative of variations in temperature of an environmental medium present between the transceivers.

7. The device according to claim 6, further **characterized in that** the control/evaluation unit is configured for temperature compensation of the echograms evaluated for object detection based on the echo runtime changes obtained during the temperature determination mode.

8. The device according to any one of the claims 1 to 7, further **characterized in that** the control/evaluation unit is configured for an object tracking mode, wherein the device continuously determines the position of one or more objects, detected to be present within the surveillance area, in successive monitoring procedures based on the echograms obtained relative to previously known positions of the transceivers.

9. A method for ultrasound surveillance of a predefinable area, in particular a closable opening area of a vehicle, comprising the following steps:
- recording and evaluating echograms by at least two ultrasonic transceivers (A, B) in at least a reflection mode, the transceivers disposed spaced from one another such that their detection ranges (S_{A}, S_{B}) are overlapping and cover a predefinable surveillance area (4) and each transceiver is located within the detection range of at least one other transceiver,
- wherein an evaluation of the echograms obtained by the transceivers is performed in view of the presence of objects within the surveillance area, and comprises a correlation comparison of at least one echogram obtained during the reflection mode by one of the transceivers to at least one echogram obtained during the reflection mode by another one of the transceivers.

10. The method according to claim 9, further **characterized in that** for the correlation comparison the echogram of one of the transceivers is compared to the echogram of the other transceiver, with the latter echogram mirrored along an echogram central axis (MA) which is associated to this transceiver and to another one of the transceivers.

11. The method according to claim 9 or 10, further **characterized in that** the transceivers are additionally controlled in a transmission mode and for object detection evaluation at least one echogram obtained in transmission is also considered.

12. The method according to any one of the claims 9 to 11, further **characterized in that** a near range object detection is performed for a respective transceiver and to that end an attenuation of a received transmission echo pulse and an attenuation of a reflection echo pulse are evaluated, said reflection echo pulse sent from one of the transceivers and received by said transceiver as a reflection signal of another one of the transceivers.

13. The method according to any one of the claims 9 to 12, further **characterized in that** a temperature determination mode is performed, wherein at least two of the transceivers are operating in a transmission mode and transmission echograms obtained thereby are monitored in view of echo runtime changes, which are representative of variations in temperature of an environmental medium present between the respective two transceivers.

14. The method according to claim 13, further **characterized in that** echograms evaluated for object detection are subjected to temperature compensation based on the echo runtime changes obtained during the temperature determination mode.

15. The method according to any one of the claims 9 to 14, further **characterized in that** the position of a respective object, detected to be present within the surveillance area, is continuously determined and tracked in successive monitoring procedures.

## Revendications

1. Dispositif de surveillance par ultrasons d'une zone prédéterminée, en particulier d'une zone refermable d'ouverture d'un véhicule, le dispositif présentant :
au moins deux émetteurs-récepteurs d'ultrasons (A, B) disposés à distance mutuelle de telle sorte que leurs zones de saisie (S_{A}, S_{B}) se superposent et couvrent une zone de surveillance (4) prédéterminée, chaque émetteur-récepteur étant situé dans la zone de détection d'au moins un autre émetteur-récepteur et
une unité (3) de commande et/ou d'évaluation conçue pour commander les émetteurs-récepteurs au moins en un mode de réflexion pour obtenir des échogrammes et pour évaluer la présence d'objets dans la zone de surveillance à partir des échogrammes obtenus à l'aide des émetteurs-récepteurs, cette évaluation comportant une comparaison de corrélation d'au moins un échogramme obtenu à l'aide d'un des émetteurs-récepteurs en mode de réflexion et d'au moins un échogramme obtenu en mode de réflexion obtenu à l'aide d'un autre des émetteurs-récepteurs.

2. Dispositif selon la revendication 1, **caractérisé en outre en ce qu'**au moins l'un des émetteurs-récepteurs fonctionne comme objet réfléchissant de référence pour les échogrammes obtenus en mode de réflexion à l'aide de l'un des autres émetteurs-récepteurs.

3. Dispositif selon les revendications 1 ou 2, **caractérisé en outre en ce que** la comparaison par corrélation comprend une comparaison de l'échogramme de l'un des émetteurs-récepteurs avec l'échogramme de l'un des autres émetteurs-récepteurs reflété autour d'un axe central (MA) d'échogramme des deux émetteurs-récepteurs.

4. Dispositif selon l'une des revendications 1 à 3, **caractérisé en outre en ce que** l'unité de commande et/ou d'évaluation est conçue pour commander de plus au moins deux émetteurs-récepteurs en un mode de transmission et pour faire intervenir également au moins un échogramme obtenu en transmission pour évaluer la détection des objets.

5. Dispositif selon la revendication 4, **caractérisé en outre en ce que** l'unité de commande et/ou d'évaluation est conçue pour détecter un objet situé à proximité de l'émetteur-récepteur concerné et pour évaluer dans ce but l'atténuation d'une impulsion d'écho de transmission reçue et l'atténuation d'une impulsion d'écho réfléchie envoyée par l'un des émetteurs-récepteurs et reçue par lui en tant que signal de réflexion d'un autre des émetteurs-récepteurs.

6. Dispositif selon l'une des revendications 1 à 5, **caractérisé en outre en ce que** l'unité de commande et/ou d'évaluation est conçue pour un mode de détermination de température dans lequel elle commande au moins deux des émetteurs-récepteurs en un mode de transmission et surveille les modifications de temps de parcours d'écho des échogrammes de transmission obtenus à cette occasion et qui représentent des modifications de la température du milieu ambiant présent entre les émetteurs-récepteurs.

7. Dispositif selon la revendication 6, **caractérisé en outre en ce que** l'unité de commande et/ou d'évaluation est conçue pour compenser la température des échogrammes évalués en vue de la détection d'objets à l'aide de modifications de temps de parcours d'écho déterminées en mode de détermination de température.

8. Dispositif selon l'une des revendications 1 à 7, **caractérisé en outre en ce que** l'unité de commande et/ou d'évaluation est conçue pour un mode de suivi d'objets dans lequel elle détermine en permanence la position d'un ou plusieurs objets détectés dans la zone de surveillance par des opérations successives de mesure à l'aide des échogrammes obtenus par rapport à des positions préalablement connues des émetteurs-récepteurs.

9. Procédé de surveillance par ultrasons d'une zone prédéterminée, en particulier d'une zone refermable d'ouverture d'un véhicule, le procédé présentant les étapes suivantes :
l'enregistrement et l'évaluation d'échogrammes par au moins deux émetteurs-récepteurs d'ultrasons (A, B) travaillant au moins en un mode de réflexion et disposés à distance mutuelle de telle sorte que leurs zones de détection (S_{A}, S_{B}) se superposent et couvrent une zone de surveillance (4) prédéterminée et que chaque émetteur-récepteur soit situé dans la zone de détection d'au moins un autre émetteur-récepteur,
l'évaluation de la présence d'objets dans la zone de surveillance étant réalisée dans les échogrammes obtenus à l'aide des émetteurs-récepteurs et comportant la comparaison par corrélation d'au moins un échogramme obtenu en mode de réflexion à l'aide de l'un des émetteurs-récepteurs avec au moins un échogramme obtenu en mode de réflexion par un autre des émetteurs-récepteurs.

10. Dispositif selon la revendication 9, **caractérisé en outre en ce que** pour la comparaison par corrélation, l'échogramme de l'un des émetteurs-récepteurs est comparé à l'échogramme de l'autre émetteur-récepteur réfléchi sur un axe central (MA) d'échogramme associé à cet émetteur-récepteur et à l'autre des émetteurs-récepteurs.

11. Procédé selon les revendications 9 ou 10, **caractérisé en outre en ce que** les émetteurs-récepteurs sont en outre commandés en un mode de transmission et **en ce qu'**également au moins un échogramme obtenu en transmission intervient dans l'évaluation de la détection d'objets.

12. Procédé selon l'une des revendications 9 à 11, **caractérisé en outre en ce qu'**une détection d'objets proches est exécutée pour chaque émetteur-récepteur et **en ce que** l'atténuation d'une impulsion de réception de transmission et l'atténuation d'une impulsion d'écho de réflexion qui est envoyée par l'un des émetteurs-récepteurs et reçue par lui en tant que signal de réflexion d'un autre des émetteurs-récepteurs sont évaluées dans ce but.

13. Procédé selon l'une des revendications 9 à 12, **caractérisé en outre en ce qu'**il exécute un mode de détermination de température dans lequel au moins deux des émetteurs-récepteurs travaillent en mode de transmission et **en ce que** des modifications de temps de parcours d'écho des échogrammes de transmission ainsi obtenus, représentatives de modifications de la température du milieu ambiant présent entre les deux émetteurs-récepteurs concernés sont surveillées.

14. Procédé selon la revendication 13, **caractérisé en outre en ce que** les échogrammes évalués en vue de la détection d'objets subissent une compensation de température à l'aide des modifications de temps de parcours d'écho déterminées en mode de détermination de température.

15. Procédé selon l'une des revendications 9 à 14, **caractérisé en outre en ce que** la position d'un objet détecté dans la zone de surveillance est déterminée et suivie en continu par des opérations successives de mesure.
